# EUROPÄISCHE PATENTSCHRIFT

(11) **EP 0 586 416 B1**
(45) Veröffentlichungstag und Bekanntmachung des Hinweises auf die Patenterteilung: **16.09.1998**
(21) Anmeldenummer: 92909819.2
(22) Anmeldetag: 21.05.1992
(51) Int. Cl.: F01K 23/10

(54) **VERFAHREN ZUR UMWELTVERTRÄGLICHEN ERZEUGUNG ELEKTRISCHER ENERGIE UND ANLAGE ZUR DURCHFÜHRUNG DES VERFAHRENS**
ENVIRONMENTALLY ACCEPTABLE ELECTRIC ENERGY GENERATION PROCESS AND PLANT
PROCEDE ET INSTALLATION DE PRODUCTION NON POLLUANTE D'ENERGIE ELECTRIQUE

(30) Priorität: 25.05.1991 DE 4117189; 24.09.1991 DE 4131757
(43) Veröffentlichungstag der Anmeldung: 16.03.1994
(73) Patentinhaber: SAARBERGWERKE AKTIENGESELLSCHAFT, 66104 Saarbrücken (DE); Siemens Aktiengesellschaft, 91052 Erlangen (DE)
(72) Erfinder: SCHOLL, Gerhard, D-6683 Speisen-Elversberg (DE); BLEIF, Friedrich, D-6607 Quierschied (DE); STADIE, Lothar, D-8552 Höchstedt (DE); PETZEL, Hans-Karl, D-6940 Weinheim (DE)
(86) Internationale Anmeldenummer: DE9200413
(87) Internationale Veröffentlichungsnummer: WO9221859

(56) Entgegenhaltungen:
- EP-A- 0 247 984
- DE-A- 4 019 343
- FR-A- 1 017 180
- FR-A- 2 323 872
- GB-A- 2 034 412
- US-A- 3 978 661

## Beschreibung

Die Erfindung betrifft ein Verfahren zur Erzeugung elektrischer Energie in einer kombinierten Gas-Dampfkraftanlage durch arbeitsleistende Entspannung sowohl eines hochgespannten, in einer mit Öl oder Gas befeuerten Gasturbinenbrennkammer erhitzten Arbeitsmittels in einer Gasturbine als auch von hochgespanntem überhitztem Dampf aus einem mit einem fossilen Brennstoff befeuerten Dampferzeuger in einer Dampfturbine, sowie eine Anlage zur Durchführung des Verfahrens.

Bei einem bekannten Verfahren (FR-1017180) zur kombinierten Erzeugung elektrischer Energie unter Verwendung von Gas- und Dampfturbinen wird das in der öl- oder gasbefeuerten Brennkammer der Gasturbine anfallende verdichtete Arbeitsgas zunächst in der Gasturbine arbeitsleistend entspannt. Die heißen Turbinenabgase, die noch einen relativ hohen Sauerstoffgehalt aufweisen, werden dann als Verbrennungsluft in die Feuerung desDampferzeugers eingeleitet. Derartige kombinierte Gas-Dampfkraftanlagen weisen gegenüber reinen Dampfkraftanlagen verbesserte Wirkungsgrade und somit leistungsbezogen geringere CO₂ -Emissionen auf. Der Sauerstoffüberschuß der Gasturbinenabgase ist darauf zurückzuführen, daß für die zur Verfügungstellung des für die Gasturbine benötigten Massenstromes eine über die eigentliche Verbrennungsluftmenge weit hinausgehende Luftmenge erforderlich ist. Da die Verbrennung in der Brennkammer bei Sauerstoffüberschuß und hohen Temperaturen erfolgt, weisen die Gasturbinenabgase aber auch einen hohen Anteil an Stickoxiden aus, der eine entsprechende Auslegung der Rauchgas-Entstickungsanlage des Dampferzeugers erforderlich macht.

Die Gasturbinenabgase haben gegenüber Frischluft einen geringeren 02-Gehalt. Dadurch erhöht sich bei gleicher Dampferzeugerleistung der Abgas- bzw. Rauchgasmassenstrom durch den Dampferzeuger und die nachgeschalteten Komponenten, wie Elektrofilter, Saugzug, Entstickungsanlage und Rauchgasentschwefelungsanlage, bis zu 50 % gegenüber der Verwendung von Frischluft für die Dampferzeugerfeuerung. Diest wiederum führt zu einem größeren Leistungseigenbedarf der Kraftwerksanlage, so daß ein Teil der durch die Kombination von Gasturbinen- und Dampfturbine gewonnenen Wirkungsgradverbesserung wieder aufgezehrt wird. Bei Schmelzkammerfeuerungen ist eine Erhöhung des Rauchgasmassenstromes ohnehin nur begrenzt möglich, da unter anderem der Schmelzfluß in der Brennkammer negativ beeinflußt wird. Eine Nachrüstung von Dampfkraftanlagen mit Schmelzkammerfeuerungen ist daher nicht oder nur bedingt möglich.

Die EP 0 247 984 A1 zeigt einen kombinierten Gas- Dampfturbinenprozeß, bei dem die benötigte Wärme nur in einem einzigen unter dem Eingangsdruck der Gasturbine stehenden Feuerraum erzeugt wird. Die erzeugte Wärme wird teilweise zur Erzeugung von Dampf für die Dampfturbine verwendet. Die nicht in den Dampfturbinenkreislauf eingekoppelte Restwärme wird mittels des verdichteten heißen Rauchgases in die Gasturbine eingeführt und dort teilweise in kinetische Energie umgewandelt.

Aufgrund des einzigen Feuerraumes, dessen Rauchgas gleichzeitig das Arbeitsmittel der Gasturbine ist, können bei dem bekannten Verfahren kostengünstige fossile Brennstoffe mangels einer noch nicht entwickelten Hochtemperaturgasreinigung nicht eingesetzt werden.

Aufgabe der vorliegenden Erfindung ist es, ein Verfahren der eingangs genannten Art zur Erzeugung elektrischer Energie in einer kombinierten Gas-Dampfkraftanlage sowohl zur Erzielung höherer Wirkungsgrade und somit zur Verringerung der spezifischen CO₂-Emission als auch zur Verringerung der Stickoxidemissionen weiterzuentwickeln.

Diese Aufgabe wird erfindungsgemäß dadurch gelöst, daß das arbeitsleistend entspannte Arbeitsmittel der Gasturbine durch indirekten Wärmetausch zwischen dem entspannten Arbeitsmittel der Gasturbine und der Verbrennungsluft des Dampferzeugers auf eine Temperatur zwischen 80° C und 40° C abgekühlt und daraufhin zumindest teilweise mit dem Rauchgas des Dampferzeugers nach dessen Abkühlung und Reinigung vermischt wird.

Durch das erfindungsgemäße Verfahren gelingt es, den Wärmeinhalt der Gasturbinenabgase zu nutzen, ohne den Rauchgasmassenstrom durch Dampferzeuger und nachgeschaltete Komponenten erhöhen zu müssen. Die durch die Kombination erreichbare Wirkungsgradverbesserung bleibt somit voll nutzbar. Darüber hinaus ist es mit dem erfindungsgemäßen Verfahren möglich, auch mit Schmelzkammerfeuerungen ausgerüstete reine Dampfkraftanlagen in einfacher Weise auf kombinierte Gas- Dampfkraftanlagen nachzurüsten.

Auch die Stickoxidbildung in der Brennkammer der Gasturbine läßt sich erheblich verringern, wenn nach einem weiteren Merkmal der Erfindung ein Teil des arbeitsleistend entspannten und abgekühlten Arbeitsmittels der Gasturbine, also des gegenüber Frischluft sauerstoffarmen Gasturbinenabgases, der zu verdichtenden Frischluft zugemischt und mit dieser in die Brennkammer der Gasturbine rückgeführt wird. Durch diese Maßnahme wird der Teil der Frischluft, der bei einer Verfahrensweise nach dem Stand der Technik im wesentlichen nur als Massenstrom für die Gasturbine vorgesehen war, ersetzt durch das sauerstoffarme Abgas der Gasturbine, so daß die Verbrennung in der Brennkammer bei weit weniger Sauerstoffüberschuß erfolgen kann. Dies wiederum hat zur Folge, daß in der Brennkammer der Gasturbine nunmehr nahezu keine thermischen Stickoxide mehr entstehen.

Zweckmäßigerweise wird der nicht rückgeführte Rest des Abgases der Gasturbine mit dem Rauchgas des Dampferzeugers vermischt und zusammen mit diesen über einen Kamin bzw. Kühlturm abgleitet. Da die Gasturbinenabgase nunmehr praktisch schadstofffrei sind, kann die Zumischung zu dem Rauchgas des Dampferzeugers nach der Rauchgasreinigung erfolgen, so daß sie infolge ihrer Temperatur von ca. 80° C zur Auftriebserhöhung der Rauchgase beitragen.

Gemäß einem weiteren Merkmal der Erfindung erfolgt die Abkühlung der Gasturbinenabgase bis in den Bereich des Wassertaupunktes, wobei zumindest ein Teil des aus den Gasturbinenabgasen auskondensierten Wassers zur Gasturbinenanlage zurückgeführt und als Eindüswasser verwendet wird.

Durch die Wassereindüsung wird einerseits die Leistung der Gasturbine und somit der Wirkungsgrad erhöht, andererseits die Stickoxidkonzentration der Turbinenabgase verringert, wobei erfindungsgemäß das Eindüswasser aus dem Gasturbinenabgas zurückgewonnen und so im Kreislauf geführt wird.

Der Teil des aus den Gasturbinenabgasen auskondensierten Wasseranteiles, der über den Bedarf an Eindüswasser hinausgeht und im wesentlichen aus der Verbrennung der Kohlenwasserstoffanteile des Gasturbinen-Brennstoffes resultiert, kann zum Ausgleich z. B. von Leckageverlusten in den Wasser-Dampfkreislauf der Dampfkraftanlage eingespeist werden.

Zweckmäßigerweise beträgt der Leistungsanteil der Gasturbine nicht mehr als etwa 20 % der Leistung der Gesamtanlage. In diesem Leistungsbereich ist der Verbrennungsluftmassenstrom des Dampferzeugers deutlich höher als der Gasturbinenabgasmassenstrom. Das bedeutet, daß die Gasturbinenabgase schon im Wärmetausch mit der Verbrennungsluft des Dampferzeugers weitgehend bis in den Wassertaupunktbereich abgekühlt werden können und der Bedarf an zusätzlicher Kälteleistung minimiert wird oder ggf. ganz entfällt.

Eine kombinierte Gas-Dampfkraftanlage zur Durchführung des erfindungsgemäßen Verfahrens weist eine Gasturbine mit einer Gasturbinenbrennkammer, einen fossil befeuerten Dampferzeuger und eine Dampfturbine auf und zeichnet sich durch einen Regenerativwärmetauscher aus, der primärseitig in die Abgasleitung für das entspannte Arbeitsmittel der Gasturbine und sekundärseitig in die Frischluftleitung von dem Gebläse zum Dampferzeuger integriert ist, wobei das entspannte und auf eine Temperatur zwischen 80°C und 40°C abgekühlte Arbeitsmittel der Gasturbine aus dem primärseitigen kalten Ende des Regenerativwärmetauschers über eine Leitung in eine das gekühlte und gereinigte Rauchgas des Dampferzeugers führende Leitung mundet.

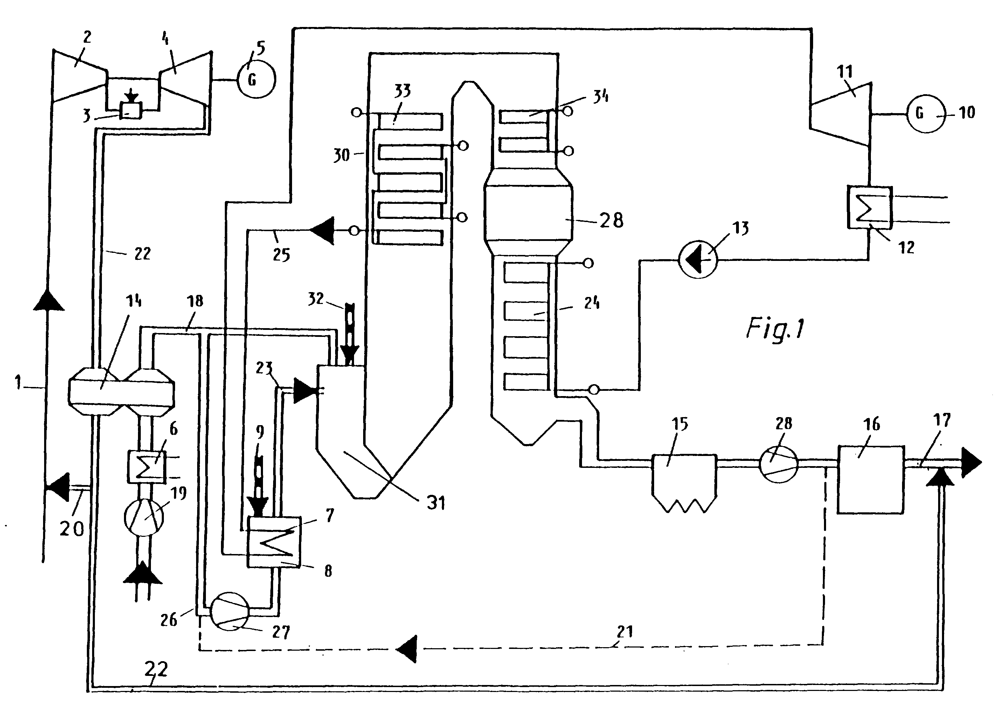

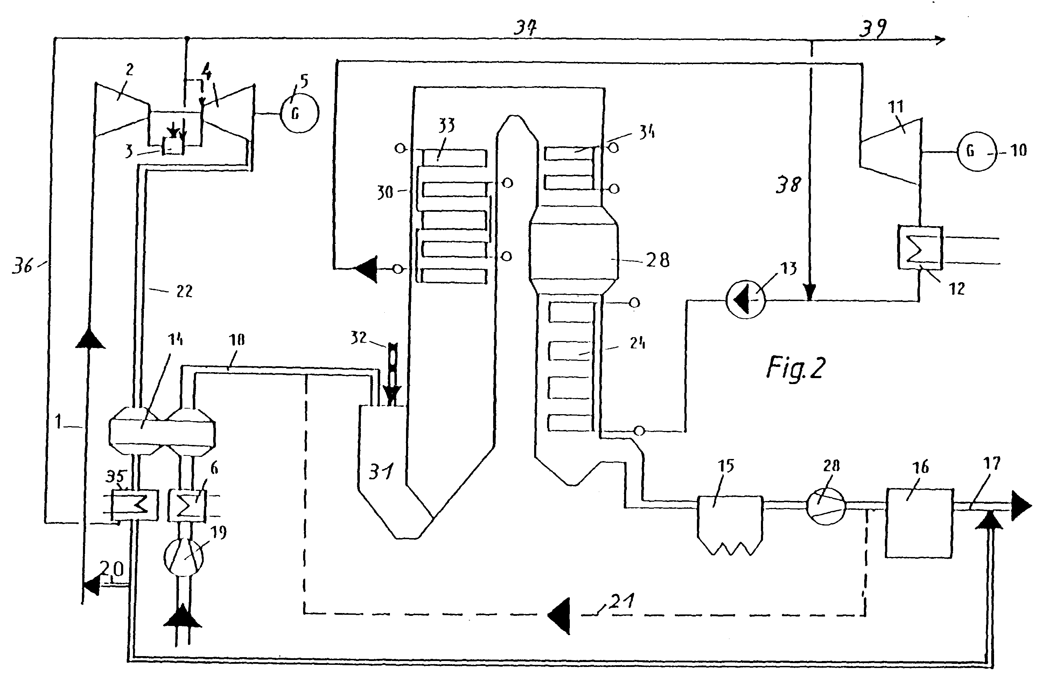

Im folgenden sind das erfindungsgemäße Verfahren und eine erfindungsgemäße Vorrichtung anhand der in den Figuren 1 und 2 schematisch dargestellten Ausführungsbeispiele weiter erläutert.

Im Beispiel der Figur 1 wird über Leitung 1 zugeführte Frischluft in einem Verdichter 2 auf etwa 6 - 20 bar verdichtet und als Verbrennungsluft in eine öl- oder gasbefeuerte Brennkammer 3 geführt. Das in der Brennkammer 3 erzeugte heiße Gas dient als Arbeitsmittel einer Gasturbine 4, in der es arbeitsleistend entspannt. wird. Die Gasturbine 4 ihrerseits treibt einen Generator 5 und auch den Verdichter 2 an.

Die Temperatur des entspannten, über Leitung 22 abströmenden Arbeitsmittels beträgt ca. 300 - 600° C.

Erfindungsgemäß wird nun die Restwärme des in Leitung 22 abströmenden, entspannten Arbeitsmittels der Gasturbine 4 auf die Verbrennungsluft eines fossil befeuerten Dampferzeugers 30 übertragen. Dazu ist ein Wärmetauscher 14, vorzugsweise wie auch in der Figur dargestellt ein Regenerativwärmetauscher, sowohl an die Leitung 22 für das abströmende Arbeitsmittel der Gasturbine 4 als auch an Leitung 18 für die Verbrennungsluft des Dampferzeugers 30 angeschlossen. Somit gelingt es, die in den Turbinenabgasen enthaltene Restwärme zur Vorerhitzung der Verbrennungsluft für den fossil befeuerten Dampferzeuger 30 zu nutzen, ohne den Rauchgasmassenstrom durch Dampferzeuger 30 und nachgeschaltete Komponenten erhöhen zu müssen. Die erfindungsgemäße Verfahrensweise erlaubt es insbesondere, die Vorteile einer kombinierten Gas-Dampfkraftanlage auch bei mit, wie im gezeichneten Beispiel, Schmelzkammerfeuerungen ausgerüsteten Altanlagen durch einfaches Vorschalten des Gasturbinenkreislaufes zu nutzen, da bei einer Schmelzkammerfeuerung die Erhöhung des Rauchgasmassenstromes, also die Durchleitung der gesamten Turbinenabgase, wegen der negativen Beeinflussung des Schmelzflusses im Feuerraum 31 nicht möglich ist.

Nach einem weiteren Merkmal wird zur Stickoxidminderung der Gasturbinenabgase ein Teilstrom des über Leitung 22 abfliesenden entspannten und im Wärmetauscher 14 auf ca. 40 - 80° C abgekühlten Gasturbinenabgases über Leitung 20 kontinuierlich mit der Frischluft für die Gasturbine 4 vermischt und zusammen mit dieser in die Brennkammer 3 zurückgeführt. Die Menge des zurückgeführten Abgasteilstromes bemißt sich dabei nach den für eine optimale Leistung der Gasturbine 4 benötigten Massenstrom und kann bis zu 50 % der gesamten Abgasmenge betragen. Bei optimaler Auslegung wird nur noch die für die Verbrennung in der Brennkammer 3 erforderliche Menge Frischluft zugeführt und die als Massenstrom für die Gasturbine 4 benötigte Zusatzmenge durch rückgeführtes sauerstoffarmes Abgas beigestellt. Auf diese Weise wird erreicht, daß die Verbrennung in der Brennkammer 3 bei wesentlich geringerem Sauerstoffüberschuß stattfindet, mit der Folge einer gegen null gehenden Bildung thermischer Stickoxide.

Der nicht rückgeführte Teil der Turbinenabgase wird weiter über Leitung 22 abgeführt und dem Rauchgas des Dampferzeugers 30, das in der Regel naß gereinigt ist, beigemischt und zusammen mit diesem über einen Kamin oder einen Kühlturm in die Atmosphäre abgegeben. Infolge seiner Restwärme trägt das Gasturbinenabgas zur Auftriebserhöhung der gesamten Rauchgasmenge bei.

Im Dampferzeuger 30, im gezeichneten Beispiel ein Schmelzkammerkessel mit dem Feuerraum 31 und einer Brennstoffzufuhr 32, wird in den Heizflächen 33, 34 der Hochdruckdampf für den Wasser-Dampfkreislauf erzeugt. Dieser Wasser-Dampfkreislauf weist neben den Heizflächen 33, 34 als weitere Hauptkomponenten eine Dampfturbine 11 mit einem Generator 10, einen Dampfkondensator 12 und eine Speisewasserpumpe 13 sowie einen weiteren Wärmetauscher 24 zur Speisewasservorwärmung auf. Gemäß einem weiteren Merkmal wird nun der im Dampferzeuger 30 gewonnene Dampf nach den Heizflächen 33 über Leitung 25 über einen weiteren Wärmetauscher 7 geführt. Dieser Wärmetauscher 7 ist in einer zusätzlichen Wirbelbettfeuerung 8 mit einer Brennstoffzufuhr 9 angeordnet. Im Wärmetauscher 7 wird der Dampf auf eine Temperatur von etwa 560 - 600° C weiter erhitzt und erst dann zur Dampfturbine 11 weitergeführt und entspannt.

Da die Überhitzung des Wasserdampfes im Wärmetauscher 7 bzw. in der Wirbelschichtfeuerung 8 nunmehr bei gegenüber dem Dampferzeuger 30 niedrigeren Feuerraumtemperaturen und gleichmäßiger Temperaturverteilung erfolgen kann, werden die sonst durch das gleichzeitige Vorliegen von hohem Druck und ungleichmäßigen Feuerraumtemperaturen gegebenen Materialprobleme für die Wärmetauscherrohe vermieden. Es hat sich gezeigt, daß durch diese weitere Überhitzung des Wasserdampfes in der Wirbelbettfeuerung 8 auf höhere Dampftemperaturen die Leistung der Dampfturbine 11 um bis zu 5 - 10 % gesteigert werden kann.

Die in der Wirbelschichtfeuerung 8 benötöigte Verbrennungsluft wird über Leitung 26 und Gebläse 27 von der in Leitung 18 strömenden Frischluft für den Dampferzeuger 30 hinter dem Wärmetauscher 14 abgezweigt. Die Rauchgase der Wirbelschichtfeuerung 8 werden über Leitung 23 in den Feuerraum 31 des Dampferzeugers 30 geführt und tragen so zur Stickoxidminderung des Dampferzeugers 30 bei.

Das aus dem Dampferzeuger 30 abströmende Rauchgas passisert nacheinander einen Elektrofilter 15, ein Saugzuggebläse 28 sowie eine Entschwefelungsanlage 16 und wird dann über Leitung 17, in die auch die Leitung 22 für die Turbinenabgase einmündet, über einem Kamin oder Kühlturm in die Atmosphäre abgegeben. Eine zusätzliche Stickoxidminderung kann erreicht werden, wenn ähnlich wie bei der Gasturbine 4 ein Teil des gereinigten Rauchgasstromes des Dampferzeugers 30 über Leitung 21 in die Wirbelschichtfeuerung 8 zurückgeführt wird. Ggf. kann vor dem Wärmetauscher 24 zusätzlich eine Entstickungsanlage 28 vorgesehen werden.

Über den in die Leitung 18 für die Verbrennungsluft des Dampferzeugers 30 stromauf vom Wärmetauscher 14 eingezeichneten Wärmetauscher 6 kann der vom Gebläse 19 zugeführten und verdichteten Frischluft zusätzlich Wärme zugeführt werden. Dieser Wärmetauscher 6 dient somit als Regelorgan zum Ausgleich von Leistungsänderungen der Gasturbine 4 bzw. zur zusätzlichen Vorwärmung der Verbrennungsluft bei Teil- oder Schwachlast der Gasturbine 4.

Im Beispiel der Figur 2 werden die Gasturbinenabgase bis in den Bereich des Wassertaupunktes abgekühlt und das auskondensierte Wasser zur Erhöhung der Gasturbinenleistung und der Reduzierung der Stickoxidbildung über Leitung 36 zurückgeführt und in die Brennkammer 3 oder an anderer, geeigneter Stelle in das hochgespannte Arbeitsmittel der Gasturbine 4 eingedüst.

Grundsätzlich kann die Abkühlung der Gasturbinenabgase bis in den Bereich des Wassertaupunktes einstufig, also unmittelbar im Wärmetauscher 14 im Wärmetausch mit der Verbrennungsluft des Dampferzeugers 30 erfolgen. Voraussetzung ist jedoch, daß das Verhältnis von Verbrennungsluftmassenstrom zu Gasturbinenabgasstrom ausreichend groß ist. Das ist jedenfalls dann sichergestellt, wenn die Leistung der Gasturbinenanlage nicht höher als etwa 20 % der Leistung der Gesamtanlage ist.

Zusätzlich zu dem Anteil, der der in die Brennkammer 3 bzw. das Arbeitsmittel der Gasturbine 4 eingedüsten Wassermenge entspricht, fällt ein aus der Verbrennung der im Gasturbinenbrennstoff enthaltenen Kohlenwasserstoffe resultierender Wasseranteil an. Der überschüssige Wasseranteil kann über Leitungen 37, 38 anstelle von Frischwasser zum Ausgleich von Leckageverlusten in den Wasser-Dampfkreislauf der Dampfkraftanlage, zweckmäßigerweise vor der Speisewasserpumpe 13, eingeleitet werden und/oder über Leitung 39 ggf. nach einer Aufbereitung, in ein Brauchwassernetz eingespeist werden.

## Patentansprüche

1. Verfahren zur Erzeugung elektrischer Energie in einer kombinierten Gas-Dampfkraftanlage durch arbeitsleistende Entspannung sowohl eines hochgespannten, in einer mit Öl oder Gas befeuerten Gasturbinenbrennkammer (3) erhitzten Arbeitsmittels in einer Gasturbine (4) als auch von hochgespanntem überhitztem Dampf aus einem mit einem fossilen Brennstoff befeuerten Dampferzeuger (30) in einer Dampfturbine (11), dadurch gekennzeichnet, daß das arbeitsleistend entspannte Arbeitsmittel der Gasturbine (4) durch indirekten Wärmetausch (14) zwischen dem entspannten Arbeitsmittel der Gasturbine und der Verbrennungsluft des Dampferzeugers auf eine Temperatur zwischen 80 ° C und 40 ° C abgekühlt und daraufhin zumindest teilweise mit dem Rauchgas des Dampferzeugers (30) nach dessen Abkühlung (34, 24) und Reinigung (28, 15, 16) vermischt wird.

2. Verfahren nach Anspruch 1, dadurch gekennzeichnet, daß ein Teil des entspannten und abgekühlten Arbeitsmittels der Gasturbine (4) der zu verdichtenden Frischluft der Gasturbine zugemischt (20) wird.

3. Verfahren nach den Ansprüchen 1 oder 2, dadurch gekennzeichnet, daß die Abkühlung des entspannten Arbeitsmittels der Gasturbine bis in den Bereich des Wassertaupunktes erfolgt, daß ein Teil des auskondensierten Wassers zur Gasturbinenanlage zurückgeführt und als Eindüswasser verwendet wird und daß zumindest ein Teil des nicht zur Gasturbinenanlage zurückgeführten Wassers in den Wasser-Dampfkreislauf der Dampfkraftanlage eingespeist wird.

4. Kombinierte Gas-Dampfkraftanlage zur Durchführung des Verfahrens nach Anspruch 1 mit einer Gasturbine (4) mit einer Gasturbinenbrennkammer (3), einem fossil befeuerten Dampferzeuger (30) und einer Dampfturbine (11), gekennzeichnet durch einen Regenerativwärmetauscher (14), der primärseitig in die Abgasleitung (22) für das entspannte Arbeitsmittel der Gasturbine (4) und sekundärseitig in die Frischluftlelitung (18) von dem Gebläse (19) zum Dampferzeuger (30) integriert ist, wobei das entspannte und auf eine Temperatur zwischen 80°C und 40°C abgekühlte Arbeitsmittel der Gasturbine aus dem primärseitigen kalten Ende des Regenerativwärmetauschers (14) über eine Leitung (22) in eine das gekühlte und gereinigte Rauchgas des Dampferzeugers führende weitere Leitung (17) mundet.

## Claims

1. Method of generating electrical energy in a combined gas/steam power plant through work-performing expansion of both a working medium at high pressure heated in an oil and/or gas-fired gas turbine combustion chamber (3) in a gas turbine (4) and super-heated steam at high pressure from a steam generator (30) fired with a fossil fuel in a steam turbine (11), characterised in that the working medium expanded performing work in the gas turbine (4) is cooled to a temperature between 80°C and 40°C by indirect exchange of heat (14) between the expanded working medium of the gas turbine and the combustion air of the steam generator and is then mixed at least partially with the flue gas of the steam generator (30) after its cooling (34, 24) and cleaning (28, 15, 16).

2. Method according to claim 1, characterised in that a part of the expanded and cooled working medium of the gas turbine (4) is mixed with the fresh air to be compressed for the gas turbine (20).

3. Method according to claims 1 or 2, characterised in that the cooling of the expanded working medium of the gas turbine is carried out down to the area of the water dewpoint, in that a part of the condensed water is fed back to the gas turbine installations and used as injection water and in that at least a part of the water not fed back to the gas turbine installation is fed into the water/steam circuit of the steam power plant.

4. Combined gas/steam power plant for implementing the method according to claim 1 with a gas turbine (4) with a gas turbine combustion chamber (3), a fossil fuel-fired steam generator (30) and a steam turbine (11), characterised by a regenerative heat exchanger (14) which is incorporated on the primary side in the exhaust gas line (22) for the expanded working medium of the gas turbine (4) and on the secondary side in the fresh air line (18) from the blower (19) to the steam generator (30), whereby the primary side cold end of the regenerative heat exchanger (14) is connected by the line (22) with a line (17) conveying the cooled and cleaned flue gas of the steam generator.

## Revendications

1. Procédé pour générer de l'énergie électrique dans une centrale combinée gaz/vapeur par détente motrice à la fois d'un fluide de travail, en tension élevée, chauffé dans une chambre de combustion de turbine (3) brûlant du fuel ou du gaz, dans une turbine à gaz (4), ainsi que de la vapeur surchauffée surtendue, avec un générateur de vapeur (30) chauffé à l'aide d'un combustible fossile dans une turbine à gaz (11),
caractérisé en ce que
le fluide de travail de la turbine à gaz (4), qui se détend en fournissant du travail, est refroidi par échange de chaleur (14) indirect entre le fluide de travail détendu de la turbine à gaz et l'air comburant du générateur de vapeur, à une température comprise entre 80°C et 40°C; puis est mélangé au moins partiellement à la fumée du générateur de vapeur (30), après son refroidissement (34, 24) et son nettoyage (28, 15, 16).

2. Procédé selon la revendication 1,
caractérisé en ce qu'
une partie du fluide de travail, détendu et refroidi, de la turbine à gaz (4) est mélangée (20) à l'air frais à comprimer par la turbine à gaz.

3. Procédé selon les revendications 1 ou 2,
caractérisé en ce que
- le refroidissement du fluide de travail détendu de la turbine à gaz se poursuit jusque dans la zone du point de rosée,
- une partie de l'eau séparée par condensation est reconduite dans l'installation de la turbine à gaz et elle est utilisée comme eau à injecter par buse, et
- au moins une partie de l'eau non reconduite à la turbine à gaz alimente le circuit eau/vapeur de la centrale à vapeur.

4. Centrale électrique combinée gaz/vapeur pour la mise en oeuvre du procédé selon la revendication 1, avec une turbine à gaz (4) et une chambre de combustion (3) de turbines à gaz, un générateur de vapeur (30) chauffé par un combustible fossile et une turbine à vapeur (11),
caractérisée en ce qu'
- un échangeur de chaleur par régénération (14) est intégré, du côté primaire, dans la conduite des gaz d'échappement (22) du fluide de travail détendu de la turbine à gaz (4) et, du côté secondaire, dans la conduite d'air frais (18) de la machine soufflante (19) vers le générateur de vapeur (30), et
- le fluide de travail de la turbine à gaz, détendu et refroidi à une température comprise entre 80°C et 40°C de l'extrémité froide du côté primaire de l'échangeur de chaleur par régénération (14), débouche par une conduite (22) dans une autre conduite (18) dans laquelle passent les fumées refroidies et nettoyées provenant du générateur de vapeur.
